Europäisches Patentamt

European Patent Office

Office européen des brevets

(11) Veröffentlichungsnummer: **0 244 646**
**A2**

(12) **EUROPÄISCHE PATENTANMELDUNG**

(21) Anmeldenummer: 87105021.7

(22) Anmeldetag: 04.04.87

(51) Int. Cl.⁴: **B65G 47/14**

(30) Priorität: 03.05.86 DE 8612182 U

(43) Veröffentlichungstag der Anmeldung:
11.11.87 Patentblatt 87/46

(84) Benannte Vertragsstaaten:
CH DE FR GB IT LI

(71) Anmelder: ROBERT BOSCH GMBH
Postfach 50
D-7000 Stuttgart 1(DE)

(72) Erfinder: Hütter, Odo, Dr.-Ing.
Hugo-Wolf-Weg 17
D-7312 Kirchheim/Teck(DE)
Erfinder: Jung, Rainer
Weidenweg 10
D-7250 Leonberg(DE)
Erfinder: Voss, Jürgen
Unkenweg 23
D-7000 Stuttgart 31(DE)

(54) Vorrichtung zum Bunkern und sortierten Zufördern von Kleinteilen.

(57) Es wird eine Vorrichtung zum Bunkern und sortierten Zufördern von Kleinteilen vorgeschlagen, bei welcher die Teile mittels eines Hubaggregats aus einem von oben nachfüllbaren Behälter (1 bzw. 19) einer Sortierstrecke (6 bzw. 18) zugeführt werden. Als Hubaggregat dient ein Kolben (5 bzw. 20), der zwischen einer unteren Stellung im Bereich des Behälterbodens (2) und einer oberen Stellung im Bereich des Einlaufs der Sortierstrecke hin-und herbewegbar angeordnet ist.

FIG.1

EP 0 244 646 A2

## Vorrichtung zum Bunkern und sortierten Zufördern von Kleinteilen

Stand der Technik

Die Erfindung geht aus von einer Vorrichtung nach der Gattung des Hauptanspruchs. Eine durch die DE-OS 28 37 419 bekannt gewordene Vorrichtung dieser Art verwendet als Hubaggregat ein Förderband, welches zusammen mit dem die Teile aufnehmenden Bunker und der Sortierstrecke in einem vorzugsweise eckigen Behälter untergebracht ist. Das quer zu einer Bunker-Abführöffnung hochfördernde Förderband befindet sich dabei in einem zum Bunkerraum abgeschotteten Teilraum des Behälters und liegt mit seinem oberen Ende vor dem Einlauf der sich am oberen Längsrand des Behälters entgegengesetzt zur Bunker-Abführrichtung verlaufenden Sortierstrecke. Diese bekannte Konstruktion zeichnet sich durch einen geringen Platzbedarf, große Vorspeicherkapazität und geringe Einfüllhöhe aus. Sie benötigt jedoch einen abgeschotteten Teilraum zur Aufnahme des Förderbandes mit einer in ihrer Größe einstellbaren Abführöffnung zum dosierten Zuführen der Kleinteile, damit das Förderband weitgehend belastungsfrei bleibt. Außerdem muß durch Anbringen einer elastischen Lippe, die kurz vor dem hochfördernden Trum des Förderbandes endet, dafür gesorgt werden, daß die Kleinteile nicht in tiefer liegende Bereiche des Teilraums gelangen können.

Vorteile der Erfindung

Die erfindungsgemäße Vorrichtung mit den kennzeichnenden Merkmalen des Hauptanspruchs hat demgegenüber den Vorteil, daß durch Verwendung eines Kolbens als Hubaggregat Abschottungen innerhalb des Behälters mit in ihrer Größe einstellbaren Öffnungen zum dosierten Zuführen der Kleinteile entbehrlich werden. Dadurch wird die Vorrichtung erheblich einfacher, robuster und kostengünstiger, wobei der geringe Platzbedarf und die große Vorspeicherkapazität erhalten bleiben.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft hinsichtlich eines einfachen und teilesparenden Aufbaus der Vorrichtung ist es, daß der Kolben einen rechteckigen oder quadratischen Querschnitt hat und in einem aus einer Wand der Sortierstrecke und einem mit dieser verbundenen, im Boden des Behälters endenden U-förmigen Teil bestehenden Rohr verschiebbar geführt ist. Damit die vom Kolbenboden bei der Hubbewegung des Kolbens erfaßten Kleinteile ohne Verwendung weiterer Hilfsmittel, wie Abstreifer oder dergleichen, in den Einlauf der Sortierstrecke gelangen, kann der Kolbenboden eine in Richtung des Einlaufs geneigte Oberfläche aufweisen. Es ist ferner vorgesehen, daß der Kolben eine durch seitliche Kolbenwände und den Kolbenboden begrenzte Kammer zur Aufnahme der Teile hat, die nach oben und zum Einlauf der Sortierstrecke hin offen ist. Dadurch ist gewährleistet, daß während eines jeden Kolbenhubs stets annähernd die gleiche Anzahl von Kleinteilen der Sortierstrecke zugeführt werden.

Zeichnung

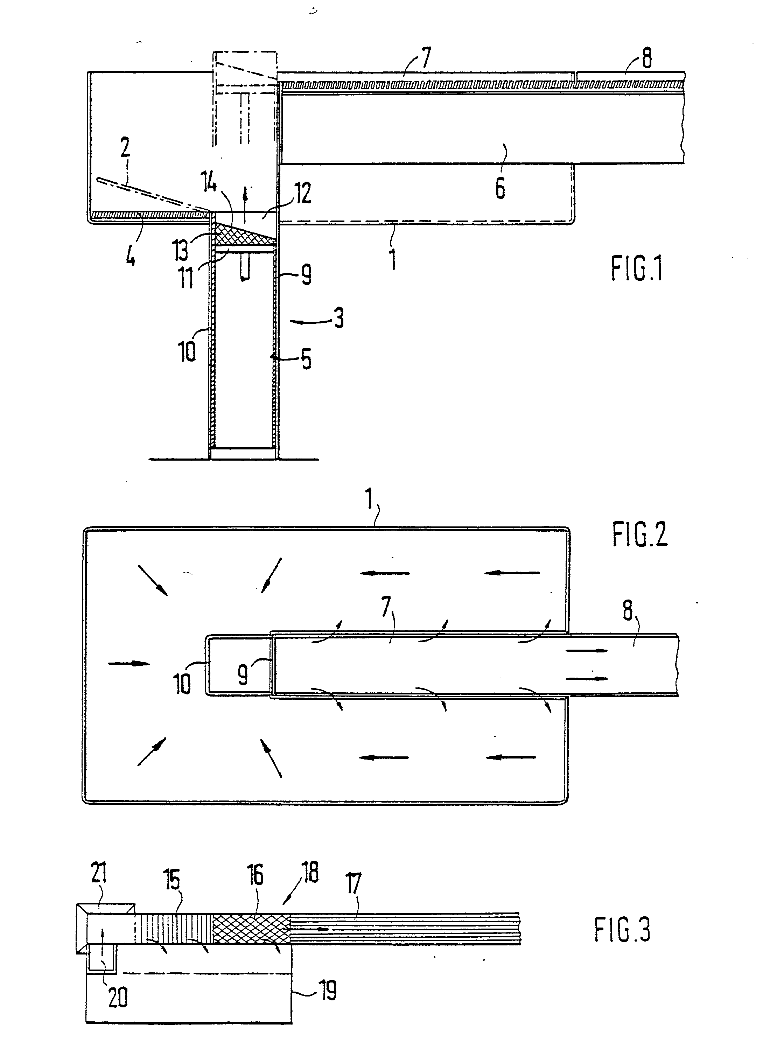

Zwei Ausführungsbeispiele der Erfindung sind in der Zeichnung dargestellt und in der nachfolgenden Beschreibung näher erläutert. Es zeigen Figur 1 ein erstes, schematisch dargestelltes Ausführungsbei spiel in einem Längsschnitt, Figur 2 die Vorrichtung nach Figur 1 in Draufsicht, Figur 3 ein weiteres Ausführungsbeispiel, gleichfalls in - schematischer Draufsicht.

Beschreibung der Ausführungsbeispiele

In den Figuren 1 und 2 ist mit 1 ein Schüttbehälter bezeichnet, in den zu sortierende Kleinteile, beispielsweise Ringscheiben, von oben her eingebracht werden können. Der strichpunktiert eingezeichnete Boden 2 des Behälters 1 ist in Richtung auf ein nachstehend näher beschriebenes Hubaggregat 3 geneigt. Die Neigung des Bodens ist so gewählt, daß die Teile selbsttätig nachrutschen. Anstelle dieses Rutschsystems kann im Bodenbereich des Behälters 1 ein Förderband 4, insbesondere ein Förderbürste auf Linearschwingförderer oder ein Linearschwingförderer mit anderen Belägen oder Aufsätzen/Platten, auf denen das Fördergut gefördert wird, installiert sein, um die Teile in den Bereich des Hubaggregats 3 zu transportieren.

Bei dem Hubaggregat 3 handelt es sich um einen Kolben, welcher im Behälter 1 zwischen einer ausgezogen gezeichneten unteren Stellung im Bereich des Behälterbodens und einer strichpunktiert gezeichneten oberen Stellung im Bereich des Einlaufs einer Sortierstrecke 6 hin-und herbewegbar angeordnet ist. Der Antrieb des Kolbens zwischen diesen beiden Positionen geschieht vorzugsweise durch eine nicht dargestellte Pneumatik. Es können aber auch hydraulisch oder mechanisch oder elektromechanisch wirkende Antriebe eingesetzt werden.

Die Sortierstrecke 6 erstreckt sich in Längsrichtung des Behälters 1 und ist im Ausführungsbeispiel nach den Figuren 1 und 2 in der Behältermitte angeordnet. Sie gliedert sich in eine Orientierungsstrecke 7 und eine Speicherstrecke 8, wobei diese Strecken aus Bandförderern oder Linearschwingförderern bestehen können. Das Hubaggregat 3 ist in Förderrichtung der Teile gesehen hinter der Orientierungsstrecke 7 angeordnet.

Der Kolben 6 hat einen rechteckigen Querschnitt. Er ist in einem gerätefesten Rohr geführt, das durch eine die Orientierungsstrecke 7 begrenzende Wand 9 und ein mit dieser verbundenes Teil 10 mit U-förmigem Querschnitt gebildet wird. Das Teil 10 ist im Boden des Behälters 1 verankert und bildet zusammen mit der Wand 9 einen Ständer für den Behälter, in dessem Inneren der Kolben 5 beweglich angeordnet ist.

Der Kolben 5 hat eine durch seitliche Kolbenwände und den Kolbenboden 11 begrenzte Kammer 12 zur Aufnahme von im Behälter 1 befindlichen Teilen, die nach oben und zur Orientierungsstrecke 7 hin offen ist. Außerdem hat der Kolbenboden eine Auflage 13, deren Oberfläche zur Orientierungsstrecke 7 hin geneigt ist.

In der unteren Stellung des Kolbens 5 liegt die Oberfläche 14 tiefer als der Boden des Behälters 1. Demzufolge füllt sich die Kammer 12 mit Kleinteilen, welche über die Rutsche 2 bzw. des Förderband 4 herangeführt werden. Wird der Kolben anschließend in seine strichpunktiert dargestellte obere Endlage überführt, so rutschen die in der Kammer 12 befindlichen Teile über die Schrägfläche 14 auf die horizontal verlaufende Orientierungsstrecke 7. Diese ist dem jeweiligen Sortiergut angepaßt und so ausgebildet, daß aussortierte Teile wieder in den Behälter 1 zurückfallen, wodurch sie erneut in den Sortierkreislauf eingeschaltet werden. Dieser Vorgang ist in Figur 2 durch Pfeile angedeutet.

Beim Ausführungsbeispiel nach Figur 3 ist die aus einer Vorsortierstrecke 15 einer Orientierungsstrecke 16 und einer Speicherstrecke 17 bestehende Sortierstrecke 18 entlang einer Seitenwand eines mit 19 bezeichneten Schüttbehälters angeordnet. Ein dem Kolben 5 von Figur 1 entsprechender Förderkolben 20 ist seitlich der Sortierstrecke 18 im Bereich einer der Vorsortierstrecke 15 vorgeschalteten Teileauffangzone 21 angeordnet. Der Boden des Kolbens 20 ist zur Sortierstrecke geneigt. Damit während des Kolbenhubes keine Teile aus dem Behälter in das Rohr 9, 10 hineinfallen können ist die Länge des Kolbens 5 bzw. 20 größer als dessen Hubhöhe. Dadurch bleibt das Rohr auch in der oberen Endlage des Kolbens von diesem verschlossen.

## Ansprüche

1. Vorrichtung zum Bunkern und sortierten Zufördern von Kleinteilen, insbesondere zu Verarbeitungsmaschinen, bei welcher die Teile aus einem vorzugsweise von oben nachfüllbaren Behälter mittels eines Hubaggregats einer beispielsweise als Schwingförderer ausgebildeten Sortierstrecke zugeführt werden, dadurch gekennzeichnet, daß das Hubaggregat aus einem Kolben (5 bzw. 20) besteht, welcher im Behälter (1 bzw. 19) zwischen einer unteren Stellung im Bereich des Behälterbodens und einer oberen Stellung im Bereich des Einlaufs der Sortierstrecke (6 bzw. 18) hin- und herbewegbar angeordnet ist.

2. Vorrichtung nach Anspruch 1, dadurch gekennzeichnet, daß der Kolben (5) einen rechteckigen oder quadratischen Querschnitt hat und in einem aus einer Wand (9) der Sortierstrecke (6) und einem mit dieser verbundenen, im Boden des Behälters (1) endenden U-förmigen Teil (10) bestehenden Rohr verschiebbar geführt ist.

3. Vorrichtung nach Anspruch 2, dadurch gekennzeichnet, daß das Rohr als Ständer für den Behälter (1) ausgebildet ist.

4. Vorrichtung nach einem der vorhergehenden Ansprüche, dadurch gekennzeichnet, daß der Kolbenboden (11) eine in Richtung des Einlaufs der Sortierstrecke (6) geneigte Oberfläche (14) aufweist.

5. Vorrichtung nach einem der vorhergehenden Ansprüche, dadurch gekennzeichnet, daß der Kolben (5 bzw. 20) eine durch seitliche Kolbenwände und den Kolbenboden begrenzte Kammer (12) zur Aufnahme der Teile hat, die nach oben und zum Einlauf der Sortierstrecke hin offen ist.

6. Vorrichtung nach einem der vorhergehenden Ansprüche, dadurch gekennzeichnet, daß der Kolben (5) in Förderrichtung der Teile gesehen hinter der Sortierstrecke (6) angeordnet ist.

7. Vorrichtung nach einem der Ansprüche 1 bis 5, dadurch gekennzeichnet, daß der Kolben (20) seitlich eines Einlaufs (21) der Sortierstrecke (18) angeordnet ist.

8. Vorrichtung nach einem der vorhergehenden Anprüche, dadurch gekennzeichnet, daß die Länge des Kolbens (5 bzw. 20) größer ist als dessen Hubhöhe.

0 244 646

FIG.1

FIG.2

FIG.3